# EUROPEAN PATENT APPLICATION

(11) **EP 4 112 354 A1**
(43) Date of publication of application: **04.01.2023**
(21) Application number: 21382572.2
(22) Date of filing: 29.06.2021
(51) Int. Cl.: B60K 37/04, B60K 37/06, B60R 1/00, B60K 35/00

(54) **METHOD AND SYSTEM FOR OPERATING A DISPLAY DEVICE, SPECIALLY IN A MOTOR VEHICLE**

(71) Applicant: Ficosa Adas, S.L.U., 08028 Barcelona (ES)
(72) Inventor: ABAD GARCÍA, Daniel, 08232 VILADECAVALLS (Barcelona) (ES)
(74) Representative: Herrero & Asociados, S.L.

(57) **Abstract**

A method and system for operating a display device (20) of an object, e.g., a motor vehicle (1), comprising receiving either an ON status or an OFF status of the object by a controller connected to an electro-optic element (10) mounted in front of a display screen (21) and sending an instruction from the controller to the electro-optic element (10), wherein the instruction is generated by the controller based on the received status of the object and wherein the electro-optic element (10) acquires an optical state selected from transparent and non-transparent in response to the instruction received by the electro-optic element (10), and wherein the electro-optic element (10) in non-transparent state blocks light at least partially from passing through so as to prevent light from reaching the display screen (21) and wherein the electro-optic element (10) is in transparent state as long as the display device (20) is providing an image.

## Description

### Field of the invention

The present invention has its application in the industry of display devices and content display systems, and more particularly, to display devices and systems for electronic (interior and/or exterior) rear-view mirror assemblies in motor vehicles.

The present invention relates to a method and an electronic system for operating a display device to protect its display screen from the ambient light through an electro-optic device. Specifically, the present invention refers to an electro-optic device protecting a display screen used in a motor vehicle against sunlight (in particular, against ultraviolet light) and also refers to a motor vehicle including the electronic system for the protection of its display device(s) using the electro-optic device.

### Background of the invention

Display screens are widely used in many electronic devices which maybe exposed to sunlight when their users operate them outdoors, for example, screens of the digital mirrors mounted on cars or other motor vehicles, display devices of unmanned aerial vehicles, displays of mobile user terminals such as smartphones, tablets or laptops, etc.

There are different types (technologies) of display screens: LCD (Liquid Crystal Display), LED (light-emitting diodes) technology including OLED (organic LED), QLED (Quantum Dot LED), etc.

The Sun may be very aggressive and the incidence of ambient light (sunlight) may end up damaging the screens and shorten the useful life of the whole display. For example, most of the OLED screens used today tend to resist no more than 70°C. In addition, OLED screens are not prepared to resist the incidence of ultraviolet rays (UV light) for long periods of time. But not only UV light damages the displays, also the visible light and the infrared light (IR light) affect negatively to the displays. Therefore, depending on the incidence of UV light, visible light or IR light on the screen the caused damages may become greater.

In particular, in the field of motor vehicles, the screens are of vital importance, as they often provide critical images for driving the vehicle. Therefore, the aforementioned problem is critical.

An existing solution is to place a protective layer on top of the screen (either LCD, OLED, or whatever technology), in such a way that the rays, and more especially the ultraviolet rays, do not pass through said protective layer and do not damage the screen. A protective layer, for example, could be a polarizer on top of the display.

Also, in the industry of motor vehicles, it is widely known that digital mirrors comprising an electro-optic (EO) can change their optical properties of light. For example, an interior digital rear view mirror normally has two modes of operation: "mirror mode" (the ambient light is reflected so as to emulate a conventional reflective mirror) and "display mode" (the driver may see an exterior portion of the motor vehicle through a display screen). The change between these two modes is achieved by using the EO located in front of the display screen of the digital rear-view mirror itself.

Display/Mirror assembly containing an EO element includes a first substrate (with a first surface and a second surface) and a second substrate (with a third surface and a fourth surface) and an electro-optic medium between the second and third surfaces. The electro-optic may have different technologies: colisteric, electro-chromic (EC), VRM (Variable reflection mirror: this is an EO device with at least two polarizers acting as a sandwich to the EO medium). The working principle of an electro-optic is known: by applying electrical power to the electro-optic medium, the optical properties are changed, usually the orientation of the light (e.g. in VRM devices) or the intensity of light (e.g. in electrochromic devices). At least in the automotive field, the technology that is used the most among EO technology is electrochromic (EC).

Therefore, it is highly desirable to provide a display device with a protector of the screen that avoids damages from environmental phenomena (electromagnetic radiation and high temperatures), especially derived from ambient light normally coming from sunlight.

### Summary of the invention

The present invention solves the aforementioned problems and overcomes previously explained state-of-art work limitations by providing a system and method for operating a display of an object (e.g., a vehicle, a mobile terminal, a wearable,...) to protect the display against environmental (typically external) electromagnetic radiation and keep it with a temperature always below the maximum temperature allowed by the display screen.

An objective of the present invention is related to the display of images through a screen while minimizing the adverse effects that light and high temperature cause to the display device. For this purpose, it is important to reduce the temperature that is generated when the light is projected onto the display.

The screen the display device may be any screen that shows an image, for example, a screen with LED technology (e.g. OLED).

In the present invention, it is the EO itself that protects the display screen by changing the EO physical properties from transparent to opaque (e.g., white colour), so that the EO when opaque prevents harmful light (e.g., UV light, sunlight, ...) from passing through and reaching the display screen.

The present invention refers to any type of EO that can acquire at least two optical states, when an electrical power is applied: i) transparent and ii) non-transparent. The present invention makes the EO stay transparent or non-transparent depending on the state i) ON or ii) OFF of the object or electronic system where the display device is installed, for example a vehicle such as a car, a robot, a dron, a mobile terminal such as a smartphone,... Electro-optics may be used in a wide variety of display devices for displaying text, still image graphics, moving pictures and videos. The term "electro-optic element" is used herein to refer to an element using an electro-optic material having first and second optical states differing in at least one optical property, the material being changed from its first to its second optical state by application of an electric field to the material. The optical property is typically color perceptible to the human eye, but may be another optical property, such as optical transmission, reflectance, luminescence or, in the case of displays intended for machine reading, pseudo-color (i.e., a variation in reflectance of electromagnetic wavelengths outside the visible range).

An aspect of the present invention refers to a method for operating a display device of an object (e.g. a motor vehicle), the display device having a display screen (e.g., OLED display), the method comprising the following steps:
- receiving a status (ON or OFF) of the object, by a controller which is connected to an electro-optic element mounted in front of a display screen;
- sending an image instruction from the controller to the display screen to provide an image;
- sending a transparency instruction, from the controller to the electro-optic element, the electro-optic element acquiring an optical state, either transparent or non-transparent, in response to the transparency instruction, and i) wherein the electro-optic element in non-transparent state blocks light at least partially from passing through so as to prevent light from reaching the display screen and ii) wherein the electro-optic element is in transparent state as long as the display device is providing an image.

Another aspect of the present invention refers to a system for operating a display device in an object (e.g. the system for a display of a motor vehicle) to prevent damage in the display screen of the display device, the system comprising i) an electro-optic element mounted in front of the display screen and configured to acquire at least two optical states selected from transparent and non-transparent, and ii) a controller connected to the electro-optic element and configured to perform the steps of the method for operating the display device described above.

Preferably, the controller is particularly configured to send the image instruction and the transparency instruction, wherein the transparency instruction is generated by the controller based on the received status of the object. The electro-optic element is enabled to acquire an optical state, either transparent or non-transparent, in response to the transparency instruction. When an ON status of the object is received by controller and the electro-optic element is in its transparent state, the transparent state of the electro-optic element cannot be changed, that is, the electro-optic element is disabled to switch its optical state to non-transparent.

Preferably, the electro-optic element used by the proposed method may form part of the display device.

In a particular case, the object refers to a motor vehicle. Preferably, the status of the motor vehicle is ON when the motor vehicle ignition is activated (turned on) and, otherwise, when the motor vehicle ignition is deactivated (turned off) the status of the motor vehicle is OFF. The motor vehicle ignition may be defined as the process or system for bringing about ignition in an internal combustion engine, typically activated by a physical key, switch, or software (e.g., by an app running in a smartphone). For example, ignition may be the process of starting the combustion of fuel in the cylinders of an internal combustion engine, or any type of starting mechanism of an electric vehicle such as a soft-start of an electric motor for an electric vehicle. In this case, when the motor vehicle ignition is turned off (OFF status received by the controller), the controller generates and sends an instruction to the electro-optic element so that it acquires the non-transparent optical state; otherwise, when the motor vehicle (ignition) is ON, the instruction generated by the controller is sent to the electro-optic element to acquire the transparent optical state. The electro-optic element is particularly configured to have the optical transparent state as long as the display device is providing or showing an image (e.g., based on a captured image taken by an image acqusition unit of the vehicle), and preferably, an image that corresponds to an external environment of the vehicle. Furthermore, the electro-optic element is particularly configured to have the non-optical transparent state when the display device is not providing an image (or the image acquisition unit is not taking a captured image, in the aforementioned example).

Furthermore, the electro-optic element is particularly configured not to change, automatically or manually, its optical state from transparent when a human user is using the object and the display device of the object is in operation (i.e., providing an image). That is, as long as the display device is providing an image, the controller is configured to ensure the optically transparent status of the electro-optic element.

In the case of a vehicle, when the ignition is ON, the controller is preferably configured not to modify (automatically or by a user interaction to any part or component of the vehicle) the optically transparent status of the electro-optic element. More preferably, the human user cannot change the optically transparent status of the electro-optic element while the ignition of the vehicle is ON. Preferably, when the ignition of the vehicle is ON, the controller is configured not to modify the optically transparent status of the electro-optic element for the display system associated to the driver. This is, the controller is configured not to modify the optically transparent status of the electro-optic element for the visual device assembly located on the driver's side.

Preferably, in the case of a vehicle, the controller is particularly configured to generate an instruction such that the electro-optic element is optically transparent as long as the vehicle is in operation (or being used by a human user). As long as the vehicle is not in operation, preferably, the instruction generated by the controller for the electro-optic element is to be at least partially non-optically transparent. More preferably, the controller is particularly configured to generate a transparency instruction such that the electro-optic element is optically transparent as long as the motor vehicle is moving and at least partially non-optically transparent as long as the vehicle is not in operation.

Preferably, the transparency instruction sent by the controller to the electro-optic element comprises a "blocking light" signal. Alternatively, the transparency instruction sent by the controller to the electro-optic element does not include a "blocking light" signal, this is, the optically transparent state of the electro-optic element may be aquired by means of a transparency instruction comprising a "blocking light" signal, or a transparency instruction that does not include the "blocking light" signal (absence of the signal).

The controller is configured to generate a signal to the electro-optic element such that said electro-optic element is in the optically transparent state as long as the display provides an image (or generates a stream of images). This is, the controller is configured to generate a "blocking light" signal to the electro-optic element for the electro-optic element to be in the optically transparent state as long as the display panel generates a stream of images, or alternatively, when the controller does not generate a signal to the electro-optic element, then the electro-optic element is in the optically transparent state as long as there is an image generated for the user in the display.

In the case that an image acquisition unit such as as camera of a vehicle is capturing an exterior image of the vehicle and when the display device is providing an image based on the image captured by the image acquisition unit, preferably, the controller is configured to generate a "blocking light" signal to the electro-optic element to acquire a substantially transparent state, wherein said signal generated by the controller cannot be changed (automatically, e.g., through a parameter, or by a user interaction) as long as the vehicle is in the operation state. More preferably, the controller is configured not to generate a signal to change the optical state of the electro-optic element from a substantially transparent state to at least partially non-transparent state, as long as the vehicle is in the operation state.

The present invention automatically (by means of an electronic control unit or controller) switches the EO from one of the two optical states to the other state based on a status (ON or OFF) of the object in order to block, at least partially, the light that passes through it and avoid light hitting the display screen. Furthermore, the EO is instructed to be in the non-transparent state when a certain time has passed during which the object is not being used by any user or at the time when it is detected that the user of the object stops using it. Therefore, when the user is not using the object, the non-transparent EO acts as a protector of the display screen, avoiding the enter of light to the display (protecting it from high temperatures). Moreover, the EO when non-transparent avoids comsuming electric energy, which is desired when the object is not being used (at least after a determined time). For example, when a driver is not in the vehicle or the user is not using his/her mobile phone, the controller sends a transparency instruction to the EO in order to acquire the non-transparent state.

According to one example of the present invention, the EO may be in the non-transparent state, except when the object is being used and, on the contrary, the EO is in the transparent state while the display device is generating an image. In the case that the object is a motor vehicle, at least (essentially) the object is being used while the vehicle is being driven. Thus, it is mandatory that the EO is transparent while driving, as the display must be ON to be used by the driver.

In another particular case, the object may refer to a wearable such as a smartwatch. When the smartwatch is not being used by a human user (the smartwatch is OFF), the controller generates and sends an instruction to the electro-optic element so that it acquires the non-transparent optical state; otherwise, when the smartwatch is ON and being operated by a human the display is showing an image related to an operation of the smartwatch), the instruction generated and sent by the controller to the electro-optic element is to acquire the transparent optical state.

Optionally, in addition, the proposed method further comprises a step of determining (preferably, by the controller) whether the object is used or not by a human user, and if the controller determines that the object is not used by the human user and the displayed image is not provided by the display device, the electro-optic element acquires the non-transparent state in response to the received instruction. Optionally, the step of determining by the controller whether the object is used or not by a human user (instruction user) comprises the step of detecting, for example, whether the human user is watching the display screen of the object by a sensor. Preferably, said sensor may be a photo-sensor (i.e., a camera), a radar system, or a sound system. More preferably, said sensor is part of or attached to the object, particularly located at or near the display device.

Preferably, the proposed method further comprises determining if the object is not used by the a human user comprises detecting that the object is not being used at least for a time configurable in the controller and wherein the electro-optic element acquires the non-transparent state, when determined that the object is not used, in response to the received instruction user and the displayed image is not provided by the display device.

A last aspect of the present invention refers to a motor vehicle comprising two (side) visual device assemblies, each assembly mounted on a side (left/right) of the motor vehicle; a first visual device assembly located on the driver's side and a second visual device assembly located on the codriver's side. Additionally, the motor vehicle comprises a third (central) visual device assembly, located between the first and second (side) visual assemblies. Each visual device assembly of the motor vehicle comprises a display device with a screen operated by the method defined above to protect its screen.

The invention is defined by the independent claims. The dependent claims define advantageous embodiments.

Some technical advantages of the invention are summarized as follows:
- Providing protecction for (OLED) displays so as to extend the life of the display.
- Avoiding the exposure of ambient light (from Sun) on the display device.
- Reducing the temperature of the display device.
- Reducing the electrical consumption in the object.

### Description of the drawings

For the purpose of aiding the understanding of the characteristics of the invention, according to a preferred practical embodiment thereof and in order to complement this description, the following Figures are attached as an integral part thereof, having an illustrative and non-limiting character:
Figure 1 shows a display device according to a preferred embodiment of the invention.
Figure 2 shows a motor vehicle using two exterior winglets and three interior display devices, according to a possible application of the invention.
Figure 3 shows a schematic representation of a touch screen of the display device for motor vehicles, according to another possible application of the invention.
Figure 4 shows a partial view of a rear-view mirror assembly of a motor vehicle with a display device, according to a possible embodiment of the invention.

### Preferred embodiment of the invention

The matters defined in this detailed description are provided to assist in a comprehensive understanding of the invention. Accordingly, those of ordinary skill in the art will recognize that variation changes and modifications of the embodiments described herein can be made without departing from the scope and spirit of the invention. Also, description of well-known functions and elements are omitted for clarity and conciseness.

Of course, the embodiments of the invention can be implemented in a variety of architectural platforms, operating and server systems, devices, systems, or applications. Any particular architectural layout or implementation presented herein is provided for purposes of illustration and comprehension only and is not intended to limit aspects of the invention.

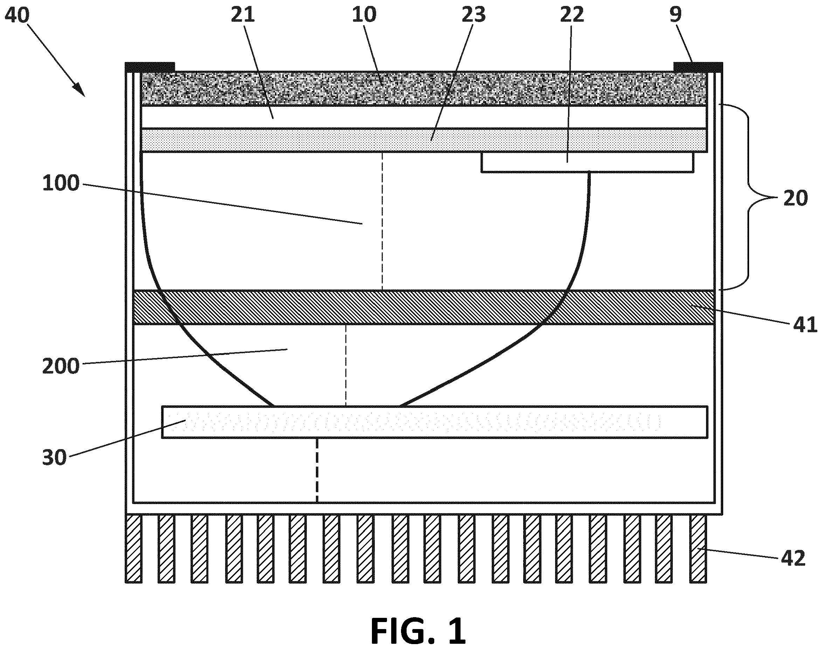

According to a preferred embodiment, a system configured to operate a display device (20) comprising a display screen (21) and to protect the display screen (21) using an electro-optic element (10), especially to be installed in a motor vehicle, is shown in Figure 1. The electro-optic element (10) may be at least one of: (i) cholesteric, (ii) electrochromic or EC; (iii) variance reflective mirror or VRM.

The objective to be solved by the system is how to protect the screen (21) against external environmental electromagnetic radiation (i.e., light), particularly when the vehicle is OFF. Furthermore, the objective is to try to maintain the temperature of the display device (20) below the maximum temperature allowed, at everytime, when the display device (20) is ON and also when OFF, particularly when the motor vehicle is OFF.

The display device (20), for example an OLED device, in turn, comprises: the display screen (21), a first ECU o electronic control unit (22) of the display (not to be confused with a second ECU (30) depicted in Figure 1) and a metal layer (23) of the display. The display device (20) is in a housing (40). Optionally, heat dissipation to the outside of the housing (40) may be carried out by a series of metal elements (42).

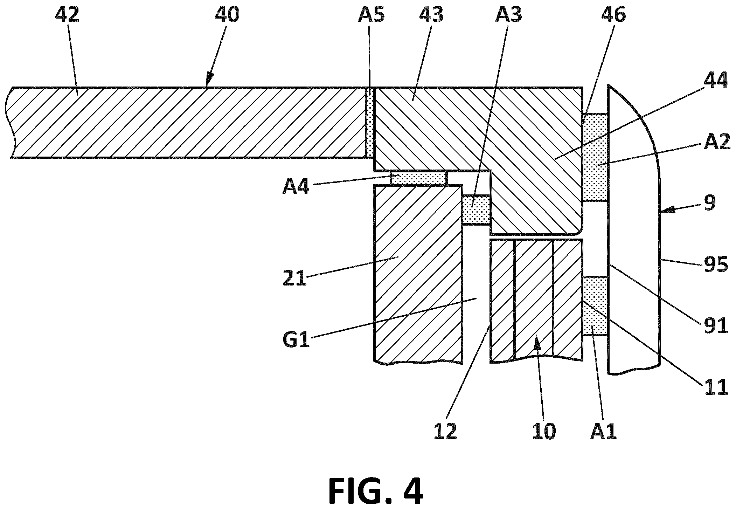

As Figure 1 shows, the electro-optic element (10) is arranged in front of the display screen (21) for its protection against ambient conditions, more particularly, against light (and temperature), and more in particular, against ultraviolet light (UV light). More particularly, the electro-optic element (10) is mounted on a position between the display screen (21) and a user of the display device (20), e.g., a driver of a motor vehicle. The electro-optic element (10) is preferably glued or attached to a cover (9). More preferably, there may be a gap between the EO element (10) and the display screen (21) (shown in Figure 4). The advantage of having a gap between the EO element (10) and the display screen (21) is that the gap acts as a thermal insulation, by convection, avoiding a rise in the temperature of the display due to the incidence of ambient light. Alternatively, the EO element (10) may be attached directly to the display screen (21).

The electro-optic element (10) receives an instruction to block ambient light from an electronic control unit or controller; preferably, a second ECU (30) which, in a preferred embodiment, is different from the first ECU (22) of the display designed by the display provider. The EO element (10) has two states: a first state, in which the EO is optically transparent; and a second state, in which the EO is not optically transparent, whereby the second state makes it possible to block (100% or at least partially) the light that hits the EO element (10), thus preventing ambient light from reaching the display screen (21).

The housing (40) of the display device (20) provides a frame (41), which may include plastic or any other thermal insulation material and which separates two zones or chambers (100, 200) of the housing (40). The first chamber (100) includes the electro-optic element (10) and the display device (20), while the second chamber (200) includes the second ECU (30). There are two different electronic control units shown in Figure 1: the first ECU (22) is associated with the display device (20) and the second ECU (30) is associated with a visual device system of a motor vehicle (1); for example, the second ECU (30) is associated with a Camera Monitoring System or CMS comprising an image acquisition unit such as a camera located in an assembly mounted at an exterior side of the motor vehicle (1). The second ECU (30) is configured to receive at least two data inputs: i) the captured image by the image acquisition unit; and ii) the ON/OFF status of the motor vehicle. The display device (20) works in association with the visual device system, for example, to provide the displayed images based on the captured images by the image acquisition unit (i.e., CMS camera) and processed by the, second, ECU (30) of the CMS. On the other hand, the first ECU (22) is in the first chamber (100) and connected: i) to the display screen (21), and ii) to the second ECU (30). The second ECU (30) is configured to generate the image instruction and the transparency instruction, the image instruction being sent to the first ECU (22), associated with the display device (20) wherein an image signal is to be displayed on its display screen (21).

When the first chamber (100) is joined with the second chamber (200) of the housing (40), there is no direct contact between the second ECU (30) installed in the second chamber (200) of the housing (40) and the display device (20) arranged in the first chamber (100). Therefore, there is a gap between the electro-optic element (10) also located in the first chamber (100) and the second ECU (30). Therefore, the frame (41) is also acting as a thermal insulation contributing to the reduction of heat transfer to the second ECU (30) when the ambient light hits the electro-optic element (10).

In another possible embodiment, the first ECU (22) and the second ECU (30) may be implemented in a same single controller or electronic control unit, preferably arranged underneath or behind the electro-optic element (10) and configured to generate the instruction for the EO element (10) to switch its state and, hence, block the ambient light partially or totally.

The instruction to block ambient light received by the electro-optic element (10) may be generated and sent by any electronic control unit or controller. In motor vehicles, the controller may be the second ECU (30) associated to the CMS (preferred example), but also the ECU of the motor vehicle itself can generate and send the instruction for the EO element (10) to block the ambient light by switching the optical state of the EO. Normally, a vehicle has several ECUs (one central "master" ECU and other peripherals "slaves" ECUs which, in turn, can be "masters" of other peripheral ECUs). The CMS ECU (i.e. the second ECU (30)) may also be connected to the ECU of the vehicle. The controller (the second ECU (30) or a master ECU or a slave ECU of the motor vehicle) receives a status of the vehicle to determine whether the vehicle is ON or OFF. The controller receives the status through a vehicle bus-communication such as a bus of a Controller Area Network or CAN bus, a bus of a Local Interconnect Network or LIN bus, Ethernet bus, optical fiber, wireless interface, etc. Depending upon the received status of the motor vehicle, the controller generates a "blocking-light" instruction for the electro-optic element (10) to control/adjust the amount of light that passes through the electro-optic element (10) in order to protect the display screen (21).

As long as there are occupants inside the vehicle and the display continues to show an image, the proposed EO must stay in the transparent state. Therefore, the EO must be non-transparent except, for instance, in some situations (ranged below) to name but a few:
- from the time when the instruction to open the doors of the vehicle is given (or, for example, turn the heating on, etc.), until all the occupants/users of the vehicle leave it and close the vehicle doors;
- from the time when the instruction is given to open the doors (or activate any other parameter of the vehicle that determines is in operation, e.g., the heating) until the driver and codriver leave the vehicle;
- from the time when the driver puts the (physical or non-physical) key into the ignition until the driver has left the vehicle (he/she is no longer inside the car);
- from the time when the key turns the ignition on until X seconds (e.g. 10 seconds) after the ignition key has been removed;
- from the time when the driver puts the key into the ignition until Y seconds (e.g. 15 seconds) after the engine has stopped, either combustion (engine) or electric (electric motor) of the vehicle.

For example, in a possible embodiment, the controller or electronic control unit receives the status of the vehicle and determines whether the vehicle is ON or OFF; the controller then generates a instruction to be sent to the EO element (10) according to the state of the vehicle and triggers in response: i) a first optical state of the EO element (10), for example, if the vehicle is ON, the first optical state is transparent, i.e., the EO element (10) in transparent status lets through the light generated by the display screen (21); ii) a second optical state of the EO element (10), for example, when the status of the vehicle has changed to OFF, the second optical state of the EO element (10) is to acquire the white color so that it cannot let the light pass through.

The optical state of the EO element (10) being non-transparent means that the EO has an opaque color and any color that does not let light pass through the EO element (10) is valid, preferably, the color of the EO in the non-transparent state is white. When the EO element (10) is in a non-transparent state, the light does not reach the screen. First of all, this avoids harmful light (e.g. UV light) damages to screens, especially if they are screens with LED technology. Furthermore, it is known that the temperature generated when the light hits the EO depends on its color: the white color favors thermal dissipation. In other words, thanks to the use of a white EO, the temperature reached by the display is advantageously lower (greater thermal dissipation). Other colors are possible, for example, the EO in the opaque (non-transparent) state gets the color of the vehicle's chassis for aesthetic reasons. The controller is in charge of choosing one color or another in order to block, at least partially, ambient light.

In a further embodiment of the invention, the EO element (10) may be deactivated at night, that is, the controller never generates any instruction to block the ambient light at night as it is not necessary. The advantage is that no electricity (battery) is wasted when it is known that there is no ambient light. The controller can determine when night falls by using the information which comes from any optical sensor (photo-sensor or a camera) provided in the vehicle. Alternatively, the controller can determine when night falls by using time information from a clock or from a geo-location system (i.e., GPS, Galileo System, etc.) or from Internet or any telematics system (e.g., the controller can connect to a cloud / server that provides real-time information on the light / radiation level at the current location).

In a possible application of the invention, when the vehicle is parked and so it is OFF, the goal is that the electro-optic element (10) does not consume electricity; therefore, since the electro-optic element (10) does not receive electric current, it acquires its non-transparent state and avoids light passing through it. On the contrary, when the car is running, i.e., the car is ON, then the electro-optic element (10) consumes electricity and acquires the transparent, or at least partially transparent, state that lets light pass through it. Summarizing, in a conventional (non-autonomous) vehicle, i) when ON, the EO element (10) is consuming electric current and lets light pass through it, while ii) if the vehicle is OFF, the EO does not consume electric current and blocks the light. Nowadays, as a motor vehicle is almost always (most of the time) parked and so in its OFF status, it is an important technical advantage that the EO element (10) is capable of blocking the light without consuming electricity.

However, another possible application of the invention is to protect the display(s) of an autonomous vehicle. In this use case, it is expected that there is "car-sharing", which implies a high factor of utilization of the vehicle, possibly higher than 50%, so the vehicle is likely to be in its ON status for longer time than in OFF status. In this situation, the controller may be configured so that the EO element (10) is opaque/non-transparent when receiving electric current, unlike the previous application of the invention in a non-autonomous vehicle. Thus, the EO element (10) acts as a screen protector consuming (electricity/power) as little as possible also for autonomous vehicles. This also applies for motor vehicles such as trucks that have a very large utilization factor since they are almost always in operation for long journeys and, therefore, it is an important that the EO element (10) blocks the light without consuming electricity or with the lowest possible energy consumption.

This goal of the invention to keep the electric energy consumption as low as possible is also interesting to apply for other kind of objects with displays such as a user's mobile terminal (smartphone, tablet, ...). Therefore, the controller connected with the electro-optic element (10) of the display (20) to be protected may be configured to generate the "blocking-light" instruction for the electro-optic element (10) based on the status of the object taking into account a factor of utilization or the amount of time for which the object is ON.

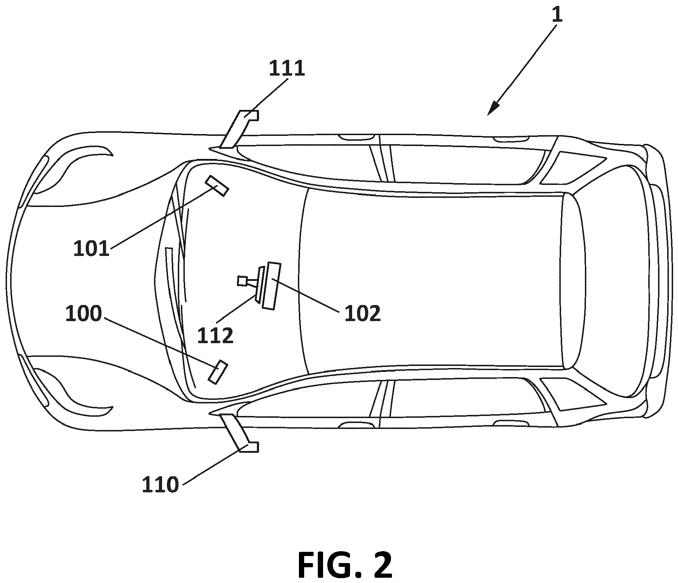

Figure 2 shows a motor vehicle (1) comprising two (side) visual device assemblies, each assembly mounted on a side (left/right) of the motor vehicle; a first visual device assembly located on the driver's side and a second visual device assembly located on the codriver's side. Additionally, the motor vehicle comprises a third (central) visual device assembly, located between the first and second (side) visual assemblies. Each side visual device assembly corresponds to a Camera Monitoring System (CMS) comprising a digital rear-view display (100, 101), which replaces the vehicle's mirrors for exterior cameras that are installed on the vehicle on supports, e.g., winglets (110, 111), where the mirrors used to be. The central visual device assembly corresponds to an Intelligent Rearview Mirror System (IRMS) which has an integrated digital display (102) in the structure of an interior rearview mirror, working as a mirror or as a monitor that relays images from the camera located at the rear or the roof of the vehicle (1), e.g. on a sharkfin (112). Preferably, all the digital displays (100, 101, 102) of motor vehicle (1) can be protected according to the system and method described above, which can be applied to any display screen using an EO as described above.

The IRMS using the proposed EO for light protection is technically advantageous with respect to IRMSs existing in prior-art in which the use of an EO element is intended for other technical problems (for auto-dimming or to switch the operating mode of the IRMS between the "mirror mode" and the "display mode"), but it is not intended (configured) to block ambient light and prevent it from reaching the display.

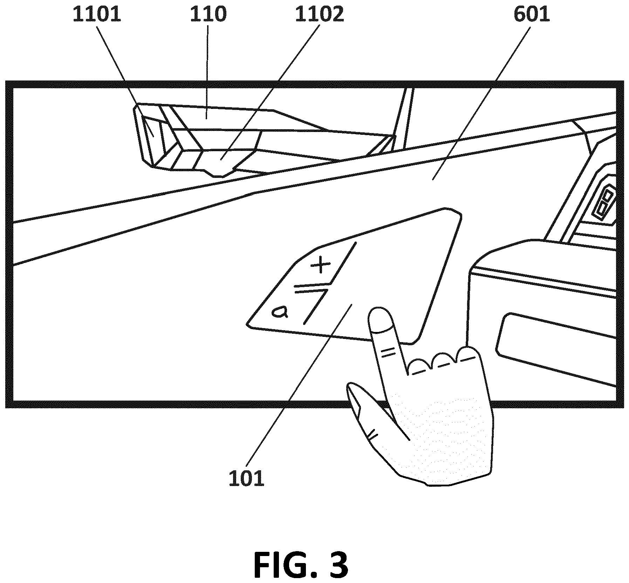

In a preferred example of application, the system and method may be applied to protect the CMS of the motor vehicle (1), the CMS comprising a camera (1101) in an exterior mirror/winglet for capturing an image that ends up going to the ECU (1102) of the CMS, which processes the image (usually performs a digital crop) and displays the image (the digital crop) through a display screen of the display (101), located inside the car, for example, on the door (601), as shown in Figure 3. Further, the displayed image may be provided in real time, this is, the displayed stream video may be shown with very little delay between captured by the camera and displayed through the display screen.

Optionally, the display device (20) may comprise a first light sensor; in particular, a photo-sensor, also called "Ambient Light Sensor" -ALS- to measure the intensity level of ambient light. Optionally, in addition, the display device (20) may comprise a second light sensor which is glare sensor or GS. Therefore, the darkening of the displayed image (depending on the ALS and the GS) can be achieved through i) the use of the electro-optic element (10), or ii) the adjustment of the intensity/ brightness of the display screen (21), or iii) applying both options i) and ii) simultaneously. In motor vehicles, it is well known that screens for rear view mirrors CMS have at least one light sensor that measures the intensity of received light to perform the "auto-dimming": the more light received by the sensor (located near the display), the greater the intensity of the display. In addition, IRMS may have two sensors: ambient sensor and glare sensor, so that, instead of varying the intensity of the displayed image, the intensity / brightness of the image can be kept constant while an electro-optic makes the darkening of the image according to the light received by the sensor. According to the present invention, this electro-optic is preferably the same EO element (10) that blocks the light so as not to damage the display device (20) as described before. Instead of photo-sensors, the first light sensor and/or the second light sensor may be a camera.

Figure 4 shows a motor vehicle rearview mirror assembly comprising a translucent cover (9) made of plastic and the housing (40) comprises a first housing portion (42) and a second housing portion (43) attached together through attachment (A5). The second housing portion (43) may be configured as a rim. The translucent cover (9) may be attached to the housing (40). The translucent cover (9) comprises a front surface (95) that is arranged closer to the user's eyes, that is preferably at an outermost position relative to the housing (40) when the mirror assembly is mounted on a surface in a vehicle interior. The translucent cover (9) also comprises a rear surface (91). The electro-optic element (10) may be attached through another attachment (A1) to the translucent cover (9) by means of, for example, a double sided, high transparent, optical clear adhesive or OCA. Other direct or indirect attaching means are of course not ruled out. As shown in Figure 4, an area of the front surface (95) of the translucent cover (9) may be greater than an area of the front surface (11) of the electro-optic element (10). The thickness of the translucent cover (9) is preferred to be greater than or equal to 2.5 mm. Preferably, the radius of the edge of the translucent cover (9) may be equal to or greater than 2.5 mm. The rear surface (91) of the translucent cover (9) is attached both to the electro-optic element (10) through the attachment (A1) and to a front surface (46) of the rim of the second housing portion (43) in the above mentioned rim protrusion (44) through attachment (A2).

In Figure 4, the display screen (21) is positioned underneath the rear surface (12) of the electro-optic element (10) defining a Gap (G1). Therefore, between the rear surface 12 of the electro-optic element (10) and the display screen (21) a first gap (G1) is defined. Gap (G1) allows direct contact between parts made of different materials to be avoided. As a result, heat transmission between the electro-optic element (10) and the display screen (21) can be advantageously avoided. Furthermore, breakages during assembly or undesired expansions due to temperature changes can also be advantageously avoided. In a particular example corresponding to an interior rear-view mirror, the display screen (21) may be attached to the rim protrusion (44) through attachment (A3) as shown in Figure 4 and/or to the rim of the second housing portion (43) through attachment (A4) surrounding the display screen (21). A surface area of the display screen (21) may be greater than a surface area of the electro-optic element (10). As a result, standard displays having a frame can be employed thus reducing costs since the frame may be concealed to the user level by the rim protrusion (44).

A particular example of the present invention is a display system of a motor vehicle for preventing damaging of a display device (20) comprising:
- a display device (20) comprising a display screen (21) for displaying a displayed image including video media, preferably the video media being provided with a frame rate of at least 30 frames per second;
- an electro-optic element (10) arranged in front of the display screen (21) and capable of acquiring at least two optical states selected from transparent and non-transparent;
- preferably, an image acquisition unit, for example, a camera (1101) arranged in a support assembly mounted at an exterior portion of the motor vehicle (1) configured to take at least a captured image of an exterior environment of the motor vehicle;
- a controller (30) connected to the display device (20), the image acquisition unit, and the electro-optic element (10), the controller (30) being configured to:
- receive a status of the motor vehicle, wherein the status of the motor vehicle is selected from one of i) an ON status and ii) an OFF status, wherein the ON status is when the motor vehicle ignition is on and the OFF status is when the motor vehicle ignition is off;
- receive the capture image taken by the image acquisition unit;
- send an image instruction to the display screen (21) to generate a displayed image including the video media based on the captured images taken by the image aquisition unit;
- send a transparency instruction to the electro-optic element (10) to make the electro-optic element (10) acquire, either the transparent state either the non-transparent state,
   wherein, if the non-transparent state is acquired, the transparency instruction makes the electro-optic element (10) block light at least partially from passing through so as to prevent light from reaching the display screen (21), and
   wherein, as long as the display device (20) is generating the displayed image, the electro-optic element (10) is enabled/configured to acquire the transparent state in response to the transparency instruction, particularly generated by the controller, and preferably, the controller (30) is configured to send the image instruction and the transparency instruction such that the transparent state of the electro-optic element (10) cannot be changed (by any transparency instruction from the controller) at least when the ON status of the motor vehicle is received by the controller (30); i.e., when the ON status of the motor vehicle is received by the controller (30), the electro-optic element (10) is disabled to switch from the transparent state to the non-transparent state.

Preferably, the electro-optic element (10) is in transparent state as long as the display device (20) is generating the displayed image when the motor vehicle is in operation (i.e., driving), for example, in the ON status.

The image instruction is sent when the controller (30) receives the ON status of the motor vehicle. Preferably, the controller (30) receives the capture images by the image acquisition unit when the controller (30) receives the ON status of the motor vehicle.

The image acquisition unit is configured to take the captured image of the exterior environment of the motor vehicle having a field of view that extends at least sideward and rearward outside the vehicle and encompasses a portion of the lateral exterior part of the vehicle.

No portion of the display screen (21) is exposed to the ambient light (radiation from the sun) as long as the electro-optic element (10) is in the non-transparent state. The electro-optic element (10) has a surface area equal to or larger than the display screen (21), or alternatively, the electro-optic element (10) is substantially smaller in surface area being the rim of the second housing portion (43) surrounding the display screen (21) as shown in Figure 4.

Preferably, the display device (20) further comprises the first control unit (22), wherein the controller (30) is connected to the first control unit (22) of the display device (20). Further, the image instruction generated by the controller (30) is sent to the first control unit (22).

The electro-optic element (10) is configured to consume electrical power when said electro-optic-element (10) is in the transparent state and being configured not to consume electrical power when said electro-optic-element (10) is in the non-transparent state. Thus, the transparency instruction includes electrical power as long as the image instruction includes electrical power. The transparency instruction does not include electrical power as long as the image instruction does not include electrical power. The controller (30) is particularly configured to send the image instruction including electrical power and the transparency instruction including electrical power such that the transparent instruction is including electrical power which cannot be interrupted at least as long as the image instruction includes electrical power.

The display system may further comprise at least a first optical sensor, for example a light sensor, configured to measure the intensity level of ambient light to be provided to the controller (30). When the intensity level of ambient light measured by the first optical sensor is below a preset threshold, the controller (30) sends the transparency instruction to the electro-optic element (10) to make the electro-optic element (10) acquire the non-transparent state without applying electrical power to the electro-optic element (10).

Further, as explained above, the darkening of the displayed image may be achieved through i) the use of the electro-optic element (10), or ii) the adjustment of the intensity/ brightness of the display screen (21), or iii) applying both options i) and ii) simultaneously.

For high utilization factors (i.e., the display system is expected to be operated for over twelve hours a day), the electro-optic element (10) is configured to consume electrical power when said electro-optic-element (10) is in the non-transparent state and being configured not to consume electrical power when said electro-optic-element (10) is in the transparent state. Thus, the transparency instruction does not include electrical power as long as the image instruction includes electrical power. The transparency instruction does not include electrical power as long as the image instruction includes electrical power. The controller (30) is particularly configured to send the image instruction including electrical power and the transparency instruction without including electrical power such that the transparency instruction that is not including electrical power cannot be provided with electrical power at least as long as the image instruction includes electrical power. The advantage is that no electrical power (battery) is wasted when it is known that there is no ambient light.

Note that in this text, the term "comprises" and its derivations (such as "comprising", etc.) should not be understood in an excluding sense, that is, these terms should not be interpreted as excluding the possibility that what is described and defined may include further elements, steps, etc.

## Claims

1. A method for operating a display device (20) of an object, **characterized by** comprising:
- receiving a status of the object by a controller connected to an electro-optic element (10) mounted in front of a display screen (21), the display screen (21) forming part of the display device (20), wherein the status of the object is selected from one of i) an ON status and ii) an OFF status;
- sending an image instruction from the controller to the display screen (21) to provide an image;
- sending a transparency instruction from the controller to the electro-optic element (10), wherein the electro-optic element (10) acquires an optical state selected from transparent and non-transparent in response to the transparency instruction received by the electro-optic element (10), and wherein the electro-optic element (10) in non-transparent state blocks light at least partially from passing through so as to prevent light from reaching the display screen (21); and
wherein the electro-optic element (10) is in transparent state as long as the display device (20) is providing an image.

2. The method according to claim 1, the controller is configured to send the image instruction and the transparency instruction such that the transparent state of the electro-optic element (10) cannot be changed when the ON status of the object is received by controller.

3. The method according to claim 1 or 2, wherein the object is a motor vehicle (1).

4. The method according to claim 3, wherein the status of the motor vehicle (1) is the ON status when the motor vehicle ignition is turned on and is the OFF status when the motor vehicle ignition is turned off, and wherein the electro-optic element (10) acquires the non-transparent optical state in response to the transparency instruction sent by the controller when the motor vehicle ignition is off and the electro-optic element (10) acquires the transparent optical state in response to the transparency instruction sent by the controller when the motor vehicle ignition is on.

5. The method according to claim 4, wherein the controller receives the status of the motor vehicle (1) though a communication interface provided by the motor vehicle (1), the communication interface being a CAN bus, a LIN bus, ethernet, optical fiber communication or a wireless interface.

6. The method according to any preceding claim, wherein the electro-optic element (10) in the non-transparent optical state is white colour.

7. The method according to any preceding claim, wherein the electro-optic element (10) in the non-transparent optical state prevents ultraviolet light passing through the electro-optic element (10) to protect the display screen (21) against ultraviolet light.

8. A display system to operate a display device (20) for an object, the display systemcomprising:
- a display device (20) comprising a display screen (21) being configured to provide a displayed image;
- an electro-optic element (10) mounted in front of the display screen (21) and capable of acquiring at least two optical states selected from transparent and non-transparent;
- the controller (30) being connected to the display screen (21), to the electro-optic element (10) and to a communication interface of the object,
wherein the controller (30) is configured to:
- receive the status of the object through the communication interface, wherein the status of the object is selected from one of i) an ON status and ii) an OFF status; and
- send an image instruction to the display screen (21) to provide the displayed image;
- send a transparency instruction to the electro-optic element (10) to make the electro-optic element (10) acquire either the transparent state either the non-transparent state,
wherein, if the non-transparent state is acquired, the transparency instruction makes the electro-optic element (10) block light at least partially from passing through so as to prevent light from reaching the display screen (21), and
wherein the electro-optic element (10) is configured to acquire the transparent state in response to the transparency instruction as long as the display device (20) is providing the displayed image.

9. The display system according to claim 8, the controller is configured to send the image instruction and the transparency instruction such that the transparent state of the electro-optic element (10) cannot be changed at least when the ON status of the object is received by controller.

10. The display system according to claim 9, wherein the object is a motor vehicle (1) in which the display system is to be installed and said display system further comprises an image acquisition unit arranged in a support assembly mounted at an exterior portion of the motor vehicle (1) configured to take at least a capture image from an exterior environment of the motor vehicle (1); the controller (30) being further connected to the image acquisition unit, the controller (30) being configured to receive the captured image taken by the image acquisition unit, wherein the displayed image is based on the captured image.

11. The display system according to any of claims 8-10, wherein the electro-optic element (10) is cholesteric, electrochromic or variance reflective mirror, and wherein the electro-optic element (10) acquires the non-transparent optical state in response to the transparency instruction when the motor vehicle ignition is off and the electro-optic element (10) acquires the transparent optical state in response to the transparency instruction when the motor vehicle ignition is on.

12. The display system according to any of claims 8-11, wherein the display device (20) further comprises a first electronic control unit (22) connected to the display screen (21), wherein the controller (30) is connected to the first electronic control unit (22), and wherein the controller (30) is configured to send an image instruction to the first electronic control unit (22) so as the display screen (21) provides the displayed image.

13. The display system according to any of claims 8-12, wherein the communication interface is a CAN bus, a LIN bus, ethernet, optical fiber communication or a wireless interface.

14. A motor vehicle (1) comprising a first visual device assembly located on the driver's side, a second visual device assembly located on the codriver's side and a third visual device assembly located between the first and second visual assemblies, wherein the first and second visual assemblies comprise a digital rear-view display (100, 101) and the third visual device assembly comprises an integrated digital display (102), **characterized in that** all the digital displays (100, 101, 102) are operated by the method defined according to claims 1-7.

15. The motor vehicle (1) according to claim 14, wherein the digital rear-view display (100, 101) is located inside the motor vehicle (1) in a visible location for the driver on a door (601) of the motor vehicle (1).
